# EUROPEAN PATENT SPECIFICATION

(11) **EP 1 042 665 B1**
(45) Date of publication and mention of the grant of the patent: **19.03.2003**
(21) Application number: 98962611.4
(22) Date of filing: 23.12.1998
(51) Int. Cl.: G01N 21/87

(54) **EXAMINING DIAMONDS AND GEMSTONES**
UNTERSUCHUNG VON DIAMANTEN UND EDELSTEINEN
EXAMEN DE DIAMANTS ET DE PIERRES PRECIEUSES

(30) Priority: 24.12.1997 GB 9727362
(43) Date of publication of application: 11.10.2000
(73) Proprietor: GERSAN ESTABLISHMENT, 9490 Vaduz (LI)
(72) Inventor: POWELL, Graham, Ralph, Buckinghamshire SL0 9QB (GB); SMITH, Martin, Phillip, Berkshire RG10 8BB (GB); BROWN, Graham, Maurice, Berkshire SL6 9LF (GB)
(74) Representative: Lyndon-Stanford, Edward Willoughby Brooke
(86) International application number: GB9803885
(87) International publication number: WO99034197

(56) References cited:
- EP-A- 0 464 824
- WO-A-96/23207
- GB-A- 1 416 568
- US-A- 5 379 102
- US-A- 5 430 538
- US-A- 5 515 157
- US-A- 5 528 416
- PATENT ABSTRACTS OF JAPAN vol. 008, no. 275 (P-321), 15 December 1984 & JP 59 141025 A (TOORU MIYAZAKI), 13 August 1984

## Description

### Background to the invention

A first aspect of the present invention relates to viewing apparatus for viewing a diamond or gemstone, comprising:
diffused irradiation means for irradiating the diamond or gemstone with diffused radiation;
direct irradiation means for irradiating the diamond or gemstone with direct radiation;
viewer means for producing an image of the diamond or gemstone when irradiated with diffused radiation or direct radiation; and
display means for displaying said image.

The first aspect of the invention also relates to a method of viewing a diamond or gemstone, comprising irradiating the diamond or gemstone with diffused radiation or with direct radiation and producing an image of the diamond or gemstone when irradiated with diffused radiation or with direct radiation.

A second aspect of the invention relates to viewing apparatus for viewing a diamond or gemstone, comprising:
irradiation means for irradiating the diamond or gemstone;
viewing means for producing an image of the diamond or gemstone when irradiated;
a display screen for displaying said image; and
a housing within which the irradiation means, the viewing means and the display means are mounted.

The second aspect of the invention also relates to the method of using the viewing apparatus of the second aspect.

It is the object of the invention to be able to view marks on the diamond or gemstone. The invention is of particular interest in viewing marks on gemstone diamonds, although it is envisaged that the diamond could alternatively be an industrial diamond, such as a wire-drawing die.

WO 97/03846 describes in detail a method of applying marks to gemstone diamonds in particular, such marks preferably being invisible to the naked eye or even invisible to the eye using a x 10 loupe, which is the loupe used by jewellers. The marks are applied by irradiating a diamond gemstone with ultraviolet laser radiation using a projection mask, the nature of the marks being such that they can be applied to a polished facet of a gemstone without detracting from its value or appearance. The marks are formed on the diamond surface by the remoral of the material of the diamond and comprise no substantial darkening.

The marks may comprise brand marks, identification numbers, or marks conveying other information regarding the gemstone, and it is generally desirable to provide a method and apparatus for viewing such marks quickly and easily, which can be used by jewellers in a retail jewellery shop, as well as diamond dealers, etc.

It is a more specific object of the present invention to provide an apparatus which displays the diamond or gemstone in such a way that it closely resembles that under normal retail lighting conditions, and allows a customer both to examine the workmanship of the stone and to be reassured that when the mark is viewed, it is the selected stone which appears on the viewer.

WO 96/23207 discloses a self-contained apparatus for making a colour analysis of gemstones. There is no disclosure of viewing marks on gemstones. If it were to be so used it would not be capable of producing an image of a mark which has been formed by the removal of the material of the gemstone and which comprises no substantial darkening, or of displaying such a mark on its display screen.

GB 1 416 568 A, US 5 515 157, JP 59-141 058, US 5 526 416 and US 5 430 538 refer to examining gemstones. None of them are capable of producing an image of a mark which has been the surface of the gemstone by the removal of the material of the gemstone and which comprises no substantial darkening, or of displaying such a mark.

It is another object of the present invention to provide an apparatus and a method which can satisfactorily view marks on a diamond or gemstone. It is a further object of the present invention to overcome or ameliorate at least one of the disadvantages of the prior art, or to provide a useful alternative.

### The Invention

According to the first aspect of the present invention, there is provided viewing apparatus as set forth in claim 1 and a method as set forth in claim 36.

Claims 1 and 36 use the terms "diffused radiation" and "direct radiation". For the avoidance of doubt, the term "diffused radiation" is intended to mean radiation which irradiates the diamond or gemstone with radiation at a relatively wide range of angles, for example, a range of angles covering at least 20°. The term "direct radiation", on the other hand, is intended to mean radiation which irradiates the diamond or gemstone with radiation at a relatively narrow range of angles, for example, a range of angles covering not more than 20°, preferably not more than 10°. The diffused irradiation means and the direct irradiation means can be partly combined, e.g. having a single source of irradiation.

The first image is preferably produced at a first level of magnification and the second image is preferably produced at a second level of magnification, the first level of magnification preferably being lower than the second level of magnification, in order to display an image of substantially the whole stone before increasing the level of magnification and changing the manner of illumination, i.e. from diffused radiation to direct radiation, so as to 'reveal' the mark.

In a first embodiment, a 'plate' may be provided which is formed with at least one aperture, for example, in a substantially central location. The plate is positioned in the irradiating path so that the gemstone is irradiated with direct radiation through the aperture. The diffuser means and the plate can be interchangeable, thereby enabling a relatively small viewing unit to be produced. In other words, the diffuser and the plate can be alternately positioned within the irradiation path. The diffuser may be attached to or formed on the end of the plate having the at least one aperture, so as to form a single optical component.

Any convenient means for changing the magnification may be provided, for example, a rotatable knob having two or more predetermined settings corresponding to two or more respective levels of magnification. In this case, the knob communicates with a rotatable wheel carrying a plurality of peripheral magnification lenses. Rotation of the knob causes rotation of the wheel so as to place the desired magnification lens or lenses in the image path. Alternatively, and more preferably, a linear sliding lens-changing mechanism capable of introducing variable magnification may be used. This enables the unit to be relatively compact. As further alternatives, a zoom optical arrangement giving a continuous range of magnifications can be used, or a fixed magnification system with an electronically zoomable camera.

In the first embodiment, the means for changing the level of magnification may be linked to the optical component carrying the diffuser and the section formed with an aperture, such that operation of the magnification changer causes longitudinal movement of the optical component so as to place the diffuser in the irradiation path if the level of magnification is decreased, or to place the section formed with at least one aperture in the irradiation path.

The apparatus of the first embodiment of the present invention may include a number of different plates or sections to be placed in the irradiation path. For example, as well as the diffuser, the apparatus may also include a plate having a single, generally central pinhole aperture and a plate having one off-set aperture, or two apertures which are positioned on either side of a generally central position on the plate so as to provide an oblique direct light source or sources to the gemstone. These sections are intended to be interchangeable such that if it is required to view the whole gemstone, the diffuser is placed in the irradiation path, if it is desired to view the mark on the surface of the gemstone, the level of magnification is increased, and the gemstone is illuminated using one of the direct light sources, the plate having the off-centre aperture or apertures being used to provide an angular or two symmetrical angular light sources to the gemstone for the purpose of revealing a mark which is formed with a plurality of grooves which have a diffractive effect on the light incident thereon, and causing the mark to appear in a particular colour, for example, blue. Two symmetrical angular light sources are preferred to give greater brightness. Alternatively, more than two apertures may be used.

Using the apparatus of the first aspect of the present invention, the gemstone is first viewed at a relatively low level of magnification with a diffuser in the irradiation path, and the position and orientation of the stone are adjusted so as to obtain a suitable view of substantially the whole crown (or other marked portion) of the gemstone. The appearance of the gemstone closely resembles that under normal retail lighting conditions, simply magnified, and allows the customer both to examine the workmanship of the stone and to be reassured that it is actually the selected stone which appears on the viewer. However, with diffused illumination, the mark is generally impossible to see and locate (due to its "invisibility").

Therefore, the level of magnification is increased, and, in the first embodiment, the diffuser is replaced by a pinhole aperture. The tilt of the table or other facet of the gemstone being viewed is then adjusted so as to obtain retro-reflection from the table or facet. Retro-reflection means radiation which is reflected back along the irradiation path. In these circumstances, the table or facet appears bright and the mark appears as a dark patch, thereby revealing the existence and position of the mark to the user.

The mark can then be positioned in a substantially central viewing position and the magnification may be further increased so that the mark can be read if necessary.

Thus by providing a first image with diffused radiation, a customer can see on the display means a view of the diamond or gemstone which corresponds to the diamond or gemstone as he or she knows it. By providing in the same apparatus a second image with direct radiation, the customer can see the mark and knows that the mark is on the same gemstone. Furthermore, by using direct reflection from the surface, the quality of the image of the mark is improved, whatever the type of mark, and it is possible to view marks which are invisible to the naked eye and to view marks which have been formed by the removal of the material of the diamond or gemstone and which comprise no substantial darkening.

The means for irradiating the gemstone preferably comprises one or more light sources such as light emitting diodes (LEDs) because of the necessity for reliability: LEDs generally have a much longer lifetime than conventional light bulbs. The irradiating means is most preferably one or more white LEDs so that if a colour camera is used to view the gemstone, the image is not influenced by the colour of the LEDs and a realistic image of the facet is achieved. The irradiation path should be substantially normal to the gemstone facet or table being viewed. In the first embodiment, the single LED is positioned directly below the facet or table being viewed. A prism beamsplitter is placed in the irradiation path which allows incident radiation to reach the facet or table being viewed, but directs radiation reflected from the facet or table to the focusing and viewing means at substantially 90° to the direction of incident radiation.

In a second embodiment, a first LED is positioned at substantially 90° to the direction at which it is required to irradiate the facet or table being viewed. The direct radiation from the first LED is incident on a plate beamsplitter positioned in the irradiation path, and is directed at substantially 90° to the facet or table being viewed. Thus, once again, the diamond or gemstone is irradiated from below. Two further LEDs are provided on either side of the first LED, and are angled inwards (towards the first LED, at an angle of, for example, around 45°. The two additional LEDs are each provided with diffuser plates. The first LED may be provided with a cover having an aperture therein to further directionalise the incident radiation. When it is required to irradiate the gemstone or diamond with direct radiation, the first (or central) LED is switched on, and the other two LEDs are off. When diffused radiation is required, the first LED is switched off, and the other two LEDs are switched on. Radiation reflected back from the diamond or gemstone passes through the plate beamsplitter, and is reflected by a prism to the focusing and viewing means.

Thus, the gemstone facet or table of interest may be irradiated through a prism beamsplitter, or, more preferably via a plate beamsplitter.

The viewing means is preferably a camera which is connected to a video monitor or screen for displaying an image of at least a portion of the gemstone being viewed. The screen is preferably provided within the same housing as all of the other components, so as to form a single, compact, portable unit. In a preferred embodiment, the video monitor may be a thin LCD display monitor so that the whole unit can be even more compact and can easily be carried or manipulated.

In accordance with a second aspect of the present invention, there is provided viewing apparatus as set forth in claim 3 and a method as set forth in claim 37.

By using direct reflection from the surface, the quality of the image of the mark is improved, whatever the type of mark, and it is possible to view marks which are invisible to the naked eye and to view marks which have been milled into the diamond or gemstone and which comprise no substantial darkening.

The display screen may be a liquid crystal display, a monitor screen or video monitor. The image displayed may be monochrome, or more preferably, in colour.

The method and apparatus of the present invention can be used for quickly and simply viewing marks on loose gemstones or on stones, particularly diamonds, mounted in jewellery. Furthermore, the apparatus of the present invention can be compact and extremely portable, as well as robust. This is further compounded by the fact that the apparatus of the present invention need require only a low voltage power supply, for example, between 12 and 24 volts, which may be supplied from the mains via an adaptor or even by means of batteries.

The apparatus of the second aspect of the present invention preferably includes the features of the first aspect of the present invention, thus providing a compact and robust viewing unit which may be used to display to the user an image of a gemstone at a relatively low magnification, such that the complete stone can be inspected by, for example, a prospective customer, and then to increase the magnification and alter the manner in which the gemstone is illuminated so as to display the portion of the gemstone carrying the 'invisible' mark.

### Preferred Embodiment

An embodiment of the present invention will now be described by way of example only and with reference to the accompanying drawings in which:
Figure 1 is a schematic diagram of a viewing apparatus according to a first embodiment of the present invention;
Figure 2 is a schematic diagram of the apparatus of Figure 1, having alternative magnification-changing means;
Figure 3 is a schematic diagram of a second embodiment of the present invention;
Figure 4 is a perspective front view of a viewing apparatus according to the present invention; and
Figure 5 is the apparatus of Figure 4, with the holding arm being in a position suitable for use thereof.

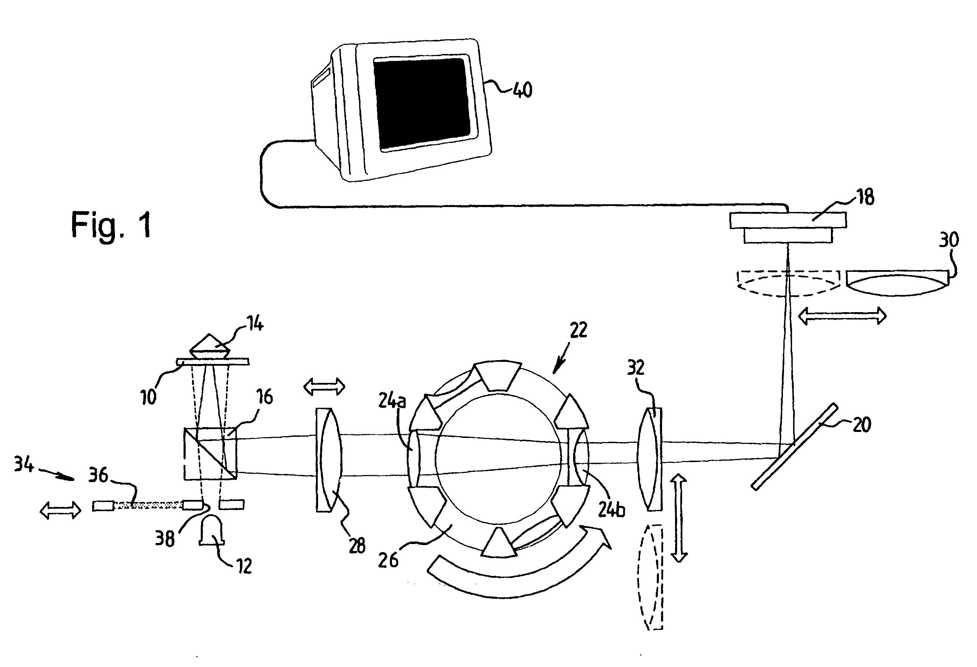

With reference to Figure 1 of the drawing, the apparatus comprises a viewing stage (not shown) for supporting or holding a gemstone, including an antireflection-coated window 10. The viewing stage may comprise a generally flat 'seat' which is mounted in the apparatus by means of a relatively slack gimbal joint which can be manually tilted or rocked in all directions and remains in position when released. Some linear movement may also be possible. The antireflection window 10 comprises a small, substantially transparent piece of glass, each side of which is coated with an antireflection coating, such that the irradiating beam is not reflected back by the window. The window 10 is preferably removably mounted within an aperture in the viewing stage. Alternatively, a separate mounting piece for receiving the window may be provided, the mounting piece being removably mounted in or on the viewing stage. The antireflection window 10 is intended to be disposable so that it can be replaced if it is damaged or it becomes dirty through use.

An LED 12 is provided for irradiating at least a portion of the gemstone 14 through a prism beamsplitter 16.

The gemstone is viewed by means of a charge coupled device (CCD) board camera 18 which receives an image of the gemstone facet being viewed via the prism beamsplitter 16 and a mirror 20. The magnification of the received image can be altered by means of a rotatable magnification changer 22 comprising a plurality of opposing pairs of magnification lenses 24a, 24b equally spaced around the periphery of a generally circular rotatable wheel 26. Rotation of the wheel 26 enables the required magnification lenses 24a, 24b to be placed in the path between the camera 18 and the prism beamsplitter 16 such that the required magnification of the image is achieved. A focusing lens 28 may also be provided in the image path between the magnification changer 22 and the beamsplitter 16, the focusing lens 28 being moveable in the directions shown so as to increase the resolution of the received image. Additional moveable magnification lenses 30, 32 are also provided in the present embodiment, the lenses being located in the image path on either side of the mirror 20 and being moveable into and out of the image path as required.

The apparatus is provided with a diffuser 36 and a pinhole aperture 38 which are interchangeable. (In Figures 1, 2 and 3 the size of the pinhole aperture and the angular width of the beam have been exaggerated.) In the embodiment shown, the diffuser 36 and the aperture 38 are formed on a single moveable opaque screen or plate 34 in the irradiation path between the beamsplitter 16 and the LED 12. It is envisaged that the plate 34 may include one or more further sections (not shown) with different arrangements of apertures.

Thus, as mentioned above, if the mark is provided with a plurality of grooves which have a diffractive effect on radiation incident thereon, then a section including an off-centre aperture or two apertures on either side of a generally central position of the section may be provided. In this case, the one or two pinhole apertures placed in the irradiation path effectively produce one or two angular light sources to the gemstone. The angle of the light source or sources (i.e. the position of the aperture or apertures) is chosen according to the colour which the mark is required to appear. Thus, if it is required to reveal the mark in blue, the aperture or apertures are positioned such that the angle of the resultant incident radiation corresponds to blue diffracted light. Similarly, the angle of the resultant directional light source or sources could be arranged to correspond to red diffracted light, such that that the revealed mark appears to be red. It will be understood that, in order to set the colour of the mark, it is also necessary to know the distance between the grooves in the mark. However, if this is known, it is envisaged that a number of different angular directional light sources could be made available by providing a number of different sections, each having one off-centre aperture or two apertures positioned on either side of a generally central position, with the holes of each section being positioned according to the colour which the mark is required to appear. Thus, the user could choose the colour in which the mark will appear to the customer.

A video monitor 40 is connected to the camera 18 for displaying the image(s) received by the camera.

In use, a gemstone 14 is positioned on the viewing stage (not shown) with its marked facet against the antireflection coated window 10. Various interchangeable holders may be attached to the viewing stage to receive a loose stone or various different types of jewellery, for example, a ring, necklace, bracelet, etc. For example, a ring holder (not shown) may be provided, comprising a cylindrical-shaped horizontal member which is mounted above the viewing stage such that a ring can be supported above the antireflection window 10 on the cylindrical or bar-shaped member, with its stone facing downwards. A bracket or stirrup may also be provided on which a necklace or bracelet may be draped such that the stone(s) thereof can be inspected.

It is preferred that the gemstone or piece of jewellery is placed in a table down position on the window (if the mark is on the table) to increase ease of location of the stone and ensure that retro-reflection is quickly established. However, an alternative arrangement could be used.

The marked facet is illuminated through the prism beamsplitter 16 by the LED 12, the irradiation path being substantially normal to the table or other facet being viewed.

The gemstone 14 is first viewed at a relatively low level magnification with the diffuser 36 in the irradiation path. The position and orientation of the stone 14 are adjusted, and the focusing lens 28 is also adjusted as necessary so that the table or other marked facet can be viewed on the video monitor 40. However, with diffused irradiation, the mark is impossible to see and locate.

Therefore, the magnification is increased by rotating the wheel 26 so as to change the pair of magnification lenses 24a, 24b which is positioned in the image path to lenses having a greater magnification quality. The operator replaces the diffuser 36 by the pinhole aperture 38. In a preferred embodiment, the magnification changer 22 and the plate 34 carrying the diffuser 36 and the pinhole aperture 38 co-operate with each other in such a way that rotation of the magnification changer 22 causes the plate 34 to move in a longitudinal direction so as to replace the diffuser 36 with the pinhole aperture 38 in the irradiation path, or vice versa. Rotation of the magnification changer 22 may also cause the moveable magnification lenses 30, 32 to move into (or out of) the image path as required.

The tilt of the table or other facet being viewed is adjusted by manually tilting, rocking or otherwise moving the viewing stage to obtain retro-reflection from the table or facet, such that the table or facet appears bright while the mark appears as a dark patch, thereby identifying the existence and position of the mark to the user.

Once identified, the image of the mark can be centred on the video monitor 40 by linear movement of the viewing stage, and the magnification may be increased further such that the mark can be read.

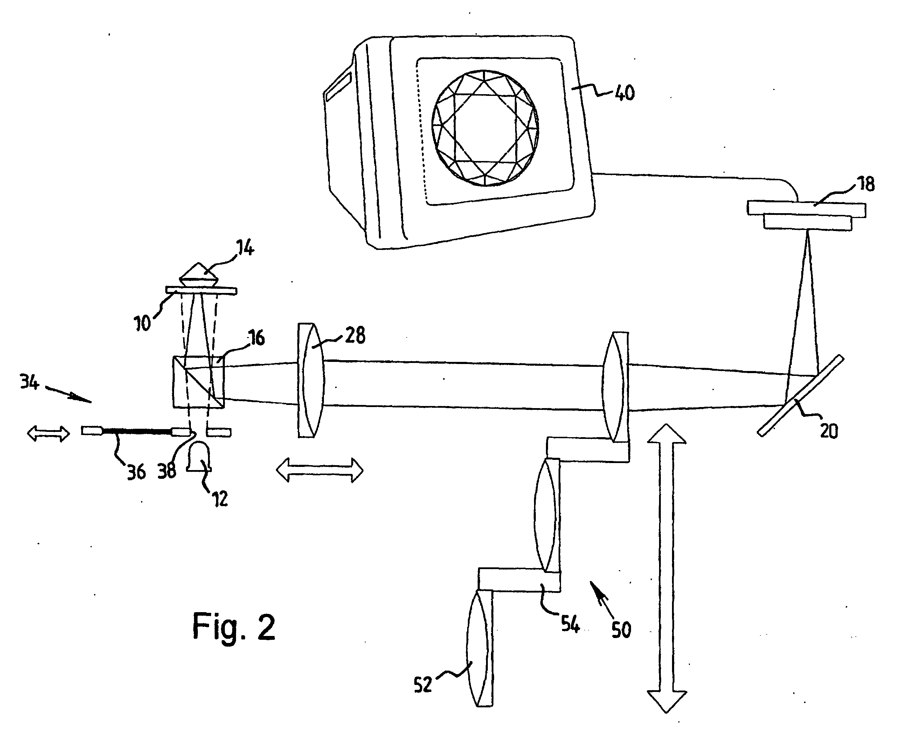

With reference to Figure 2 of the drawings, a linear sliding magnification-changing means 50 is provided instead of the rotating arrangement 22 shown in Figure 1. The magnification-changing means 50 comprises a plurality of lenses 52 having different levels of magnification. The lenses are provided on a linear sliding base 54, which can be moved by a user by means of a lever (not shown) which is accessible outside the viewing apparatus. With the sliding magnification changing mechanism, it is possible to make the overall unit more compact than with the rotating arrangement shown in Figure 1.

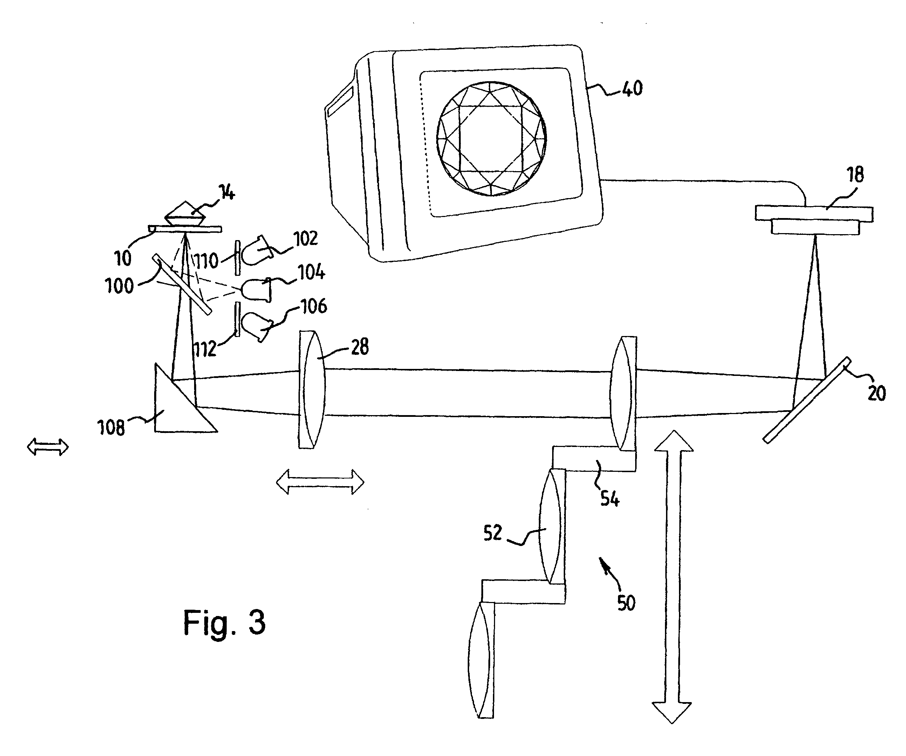

Referring to Figure 3 of the drawings, a second embodiment of the viewing apparatus of the present invention is very similar in many respects to the first embodiment of the invention, and the same reference numbers are used for like components. The main difference between the first and second embodiments, is the use in the second embodiment of a plate beamsplitter 100, instead of a prism beamsplitter, and the position of the light source(s). Another significant difference is that the plate 34 having the diffuser screen 36 and aperture 38 is omitted in the second embodiment.

In the embodiment of Figure 3, three LEDs 102, 104, 106 are provided, with the plate beamsplitter 100 being placed so as to direct radiation from the LEDs orthogonally upwards to the diamond 14. Radiation reflected from the diamond 14 passes through the beamsplitter 100 to a prism 108 which directs the light orthogonally to the viewing means.

The central LED 104 is intended to irradiate the diamond 14 with direct radiation, and a cover having an aperture formed therein (not shown) may be provided to restrict the angular spread of the radiation. The other two LEDs 102, 106 are angled inwardly towards the central LED 104, as shown, and each of these two LEDs 102, 106 is provided with a diffuser 110, 112.

Operation of the apparatus according to the second embodiment is essentially the same as operation of the first embodiment. However, during the stage where the diamond 14 is illuminated by the central LED 104, the LEDs 102, 106 are off. When it is required to irradiate the diamond 14 with diffused radiation, the central LED 104 is switched off, and the other two LEDs 102, 106 are switched on.

The advantage of using a plate beamsplitter, as in the second embodiment, instead of a prism beamsplitter, is that it eliminates degradation of the image caused by spurious internally reflected light.

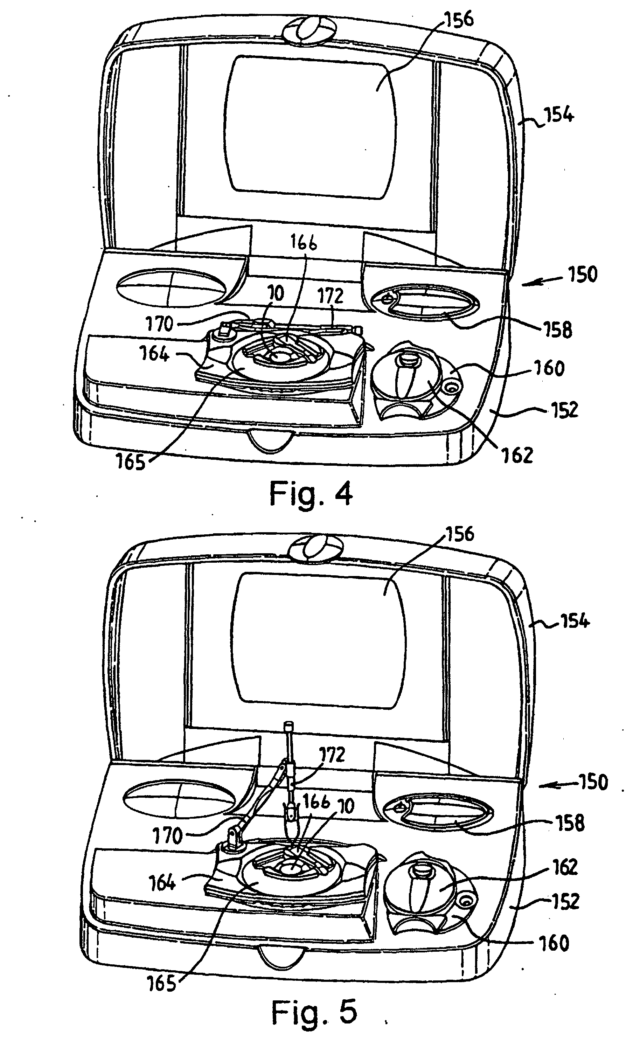

Referring to Figures 4 and 5 of the drawings, the viewing apparatus of the first or second embodiments of the present invention may be housed within a single unit 150 comprising a base portion 152 and a lid 154 hinged along one edge of the base portion 152. A screen 156 is provided within the lid 154 so as to lie substantially flush with the inner surface thereof. In one embodiment, the screen 156 may be pivotable along at least one axis, but in a preferred embodiment, the screen 156 is fixed, and a turntable (not shown) is provided on the lower surface of the base portion 152, so that the whole unit can be easily rotated.

An on/off switch or button 158 is provided in the base portion 152. It is also possible to provide means (not shown) for adjusting the colour, contrast and brightness of the viewed image. Such adjustment means can be provided in the base portion 152 or in the lid 154, beside the screen 156.

External magnification changing means 160 is provided in the base portion 152 and external focusing means 162 is also provided.

The viewing stage 164 is mounted on the base portion 152 so that it can be manually rocked or tilted to adjust the position of the diamond 14, when the apparatus is in use. The viewing stage 164 includes a rotatable plate 165 so that the orientation of the diamond or gemstone being examined can be altered. The rotatable plate 165 carries the anti-reflection coated window 10.

The viewing stage 164 is provided with a clasp 166 which is hinged thereto and spring biased downwards so that, in use, it can be lifted to place a piece of jewellery (not shown) on the anti-reflection window 10, and then released so that it exerts a downward pressure on the diamond to be examined and holds it in place. The facet or table to be examined should be held substantially parallel to the plane of the anti-reflection window 10.

Another means for holding a piece of jewellery in position is provided in the form of an arm 170 which is pivotably mounted on the viewing stage 164 so that when it is not being used it can lie flat against the viewing stage, as shown in Figure 4, and can be pivoted to a substantially vertical position for use, as shown in Figure 5. The arm, is provided with a clasp 172 for gripping a piece of jewellery or gemstone to hold it in position. The aim, once again, is for the surface of the gemstone to be examined to be substantially parallel to the anti-reflection window 10.

Unless the context clearly requires otherwise, throughout the description and the claims, the words "comprise", "comprising", and the like, are to be construed in an inclusive as opposed to an exclusive or exhaustive sense, that is to say in the sense of "including, but not limited to".

The present invention has been described above purely by way of example, and modifications can be made.

Although the present invention is primarily intended to examine gemstones, and in particular diamond gemstones, it is also suitable for examining industrial diamond.

## Claims

1. Viewing apparatus for viewing a diamond or gemstone (14), comprising:
diffused irradiation means (36 or 102, 106) for irradiating the diamond or gemstone (14) with diffused radiation;
direct irradiation means (38 or 104) for irradiating the diamond or gemstone (14) with direct radiation;
viewing means (28, 22, 30, 32 or 28, 50) for producing an image of the diamond or gemstone when irradiated with diffused radiation or direct radiation; and
display means (40 or 156) for displaying said image;
**characterized in that** the viewing apparatus is for viewing a mark on the surface of the diamond or gemstone, the viewing means (28, 22, 30, 32 or 28, 50) are for producing a first image of at least a portion of said surface when irradiating with diffused radiation and, by direct reflection from said surface when irradiated with direct radiation, a second image of at least the portion of said surface on which the mark is formed, and the display means (40 or 156) being for displaying said first and second images.

2. Viewing apparatus according to claim 1, wherein all of the claimed elements of the apparatus are included in a single housing (150).

3. Viewing apparatus for viewing a diamond or gemstone (14), comprising:
irradiation means (36, 38 or 102, 104, 106) for irradiating the diamond or gemstone (14);
viewing means (28, 22, 30, 32 or 28, 50) for producing an image of the diamond or gemstone when irradiated;
a display screen (156) for displaying said image; and
a housing (150) within which the irradiating means (36, 38 or 102, 104, 106), the viewing means (28, 22, 30, 32 or 28, 50) and the display screen (156) are mounted.
**characterised in that** the viewing apparatus is for viewing a mark on the surface of the diamond or gemstone, and the viewing means (28, 22, 30, 32 or 28, 50) are for producing a magnified image of at least a portion of said surface by direct reflection from said surface.

4. Viewing apparatus according to any of the preceding claims, wherein the viewing means (28, 22, 30, 32 or 28, 50) are for producing the second direct reflection image by retro-reflection.

5. Viewing apparatus according to any of the preceding claims, comprising a beamsplitter (16) for directing radiation from said irradiation means to the surface of said diamond or gemstone to be viewed.

6. Viewing apparatus according to any of the preceding claims, wherein said diffused irradiation means comprise at least two irradiation sources (102, 106), the sources (102, 106) being angled such that their irradiation paths overlap at least partially.

7. Viewing apparatus according to claim 1 or 2 or any of claims 4 to 6 when read as appendant directly or indirectly to claim 1, arranged such that said direct irradiation means is off when said diffused irradiation means is on, and said diffused irradiation means is off when said direct irradiation means is on.

8. Viewing apparatus according to any of the preceding claims, wherein the irradiation means for producing the image by direct reffection comprise an opaque screen (34) which is formed with a single, generally central aperture (38), said screen (34) being positioned within the irradiation path, in use, such that the diamond or gemstone (14) is irradiated through said aperture (38) generally normal to said surface.

9. Viewing apparatus according to any of claims 1 to 7, wherein the irradiation means for producing the image by direct reflection comprise an opaque screen which is formed with two apertures which are located in the screen in either side of a generally central position thereof, whereby said surface can be illuminated with light rays at substantially the same angle to the normal to said surface, but, as seen looking normal to said surface, in substantially opposite directions.

10. Viewing apparatus according to any of claims 1 to 7, wherein the irradiation means for producing the unque by reflection comprises an opaque screen which is formed with a single, off-centre aperture, whereby said surface can be illuminated with a ray at an angle to the normal to said surface.

11. Viewing apparatus according to all of claims 8 to 10, wherein the opaque screen has said generally central aperture, said two apertures and said single, off-centre aperture, and the apparatus is arranged such that the diamond or gemstone can be irradiated using the central aperture or the said two apertures or the off-centre aperture.

12. Viewing apparatus according to any of claims 1 to 7, wherein the irradiation means for producing the image by direct reflection comprises an opaque screen which is formed with a plurality of apertures.

13. Viewing apparatus according to claim 1 or 2 or any of claims 4 to 12 when read as appendant directly or indirectly to claim 1, wherein there is a single source of irradiation (12) which can be is comprised in associated with said diffuser irradiation means (36) and in said direct irradiation means (38).

14. Viewing apparatus according to any of the preceding claims, comprising means (22 or 50) for changing the level of magnification at which said diamond or gemstone is viewed.

15. Viewing apparatus according to claim 14, wherein said magnification level changing means (22) comprise a rotatable wheel (26) having a plurality of peripheral magnification lenses (24a, 24b).

16. Viewing apparatus according to claim 14, wherein said magnification level changing means comprise a zoom magnification system comprising a fixed magnification system with an electronically zoomable camera.

17. Viewing apparatus according to claim 14, wherein said magnification level changing means (50) comprise a plurality of lenses (52) and means for moving the lenses laterally into the respective light path.

18. Viewing apparatus according to any one of claims 14 to 17 when read as appendant directly or indirectly to claim 1, wherein said magnification level changing means are associated with the diffused irradiation means and the direct irradiation means, whereby the respective irradiation means is operated when the magnification is changed to a predetermined level.

19. Viewing apparatus according to claim 18, wherein said first image is produced at a first level of magnification and said second image is produced at a second, different level of magnification.

20. Viewing apparatus according to claim 19, wherein the first level of magnification is lower than the second level.

21. Viewing apparatus according to any of the preceding claims, comprising a moveable viewing stage (10) on which the diamond or gemstone (14) is to be located, the position of the diamond or gemstone (14) relative to the irradiation path being adjustable by moving the viewing stage (10).

22. Viewing apparatus according to any of the preceding claims, comprising a viewing stage (10), at least a portion of which includes a transparent window on or above which the diamond or gemstone (14) to be viewed can be placed.

23. Viewing apparatus according to claim 22, wherein at least the underside of said transparent window (10) is coated with an antireflection substance.

24. Viewing apparatus according to any of claims 21 to 23, wherein said viewing stage (10) is mounted by means of a gimbal, such that the viewing stage can be tilted and moved in use.

25. Viewing apparatus according to any of claims 21 to 24, wherein said viewing stage (10) includes a rotatable plate so that the orientation of the diamond or gemstone about the viewing axis can be altered.

26. Viewing apparatus according to any of the preceding claims, comprising means for holding said diamond or gemstone (14).

27. Viewing apparatus according to any of the preceding claims, wherein said irradiation means comprises one or more white light emitting diodes (12 or 102, 104, 106).

28. Viewing apparatus according to any of the preceding claims, wherein said viewing means comprises a camera (18).

29. Viewing apparatus according to any of the preceding claims, wherein said display means or display screen comprises a video monitor (40 or 156).

30. Viewing apparatus according to claim 29, wherein said video monitor (156) is a thin LCD display monitor.

31. Viewing apparatus according claim 2 or 3 or to any of claims 4 to 30 when read an appendant directly or indirectly to claim 2 or 3, wherein the housing (150) comprises a base (152) and a cover (154) attached to the base (152), the display means or display screen (156) being mounted on or in said cover (154).

32. Viewing apparatus according to any of claims 2 to 31, wherein the display means or display screen (156) is pivotal relative to the housing (150).

33. Viewing apparatus according to any of claims 2 to 32, comprising a turntable on the lower surface of the housing (150) such that the housing (150) is rotatable relative to the surface on which it stands.

34. Viewing apparatus according to any of the preceding claims, and capable of producing an image of a mark which is invisible and of displaying the mark on the display means or display screen.

35. Viewing apparatus according to any of the preceding claims, and capable of producing an image of a mark which has been formed on the surface of the diamond or gemstone by removal of material of the diamond or gemstone and which mark comprises no substantial darkening, and of displaying the mark on the display means or display screen.

36. A method of viewing a diamond or gemstone (14), comprising irradiating the diamond or gemstone with diffused radiation or with direct radiation and producing an image of the diamond or gemstone when irradiated with diffused radiation or with direct radiation, **characterized in that** the method is for viewing a mark on the surface of the diamond or gemstone (14), and comprises the steps of irradiating at least a portion of said surface with diffused radiation, irradiating at least a portion of said surface with direct radiation, producing a first image of at least a portion of said surface when irradiated with diffused irradiation and, by direct reflection from said surface when irradiated with direct radiation, a second image of at least the portion of said surface on which the mark is formed, and displaying the first and the second images, the second image including the mark.

37. A method of viewing a diamond or gemstone (14), **characterized in that** a mark on the surface of the diamond or gemstone (14) is viewed using the viewing apparatus of claim 3 to produce an image of the mark, and displaying the mark on the display screen (156).

38. A method according to claim 36, wherein said first image is produced at a first level of magnification, and said second image is produced at a second, different level of magnification.

39. A method according to claim 38, wherein the first level of magnification is lower than the second level.

40. A method according to claim 36 or to claim 38 or 39 when read as appendant directly or indirectly to claim 36, wherein, when the surface of the diamond or gemstone (14) is irradiated with diffused radiation, substantially all of at least one facet of the diamond or gemstone (14) is displayed.

41. A method according to any of claims 36 to 40, including adjusting the position of the diamond or gemstone (14) relative to the irradiation path so that mark can be imaged, and displaying the portion of the facet which bears the mark.

42. A method according to claim 41, wherein the position of the diamond or gemstone is adjusted to obtain retro-reflection.

43. A method according to claim 41 or 42, wherein the diamond or gemstone (14) is located on a moveable viewing stage (10), the position of the diamond or gemstone (14) relative to the irradiation path being adjusted by moving the viewing stage (10).

44. A method according to any one of claims 36 to 43, wherein said gemstone (14) is a diamond gemstone.

45. A method according to any of claims 36 to 44, wherein the mark is invisible to the naked eye, and when the image is formed by direct reflection, the mark is displayed on the display means or display screen.

46. A method according to any of claims 36 to 45, wherein the mark has been formed in the surface of the diamond or gemstone by removal of material of the diamond or gemstone and comprises no substantial darkening, and when the image is formed by direct reflection, the mark is displayed on the display means or display screen.

47. A method according to any of claims 36 to 46 and carried out using the apparatus of any of claims 2 and 4 to 35.

## Patentansprüche

1. Betrachtungsvorrichtung für das Betrachten eines Diamanten oder Edelsteines (14), die aufweist:
eine Diffusionsbestrahlungseinrichtung (36 oder 102, 106) für das Bestrahlen des Diamanten oder Edelsteines (14) mit Diffusionsstrahlung;
eine Direktbestrahlungseinrichtung (38 oder 104) für das Bestrahlen des Diamanten oder Edelsteines (14) mit Direktstrahlung;
eine Betrachtungseinrichtung (28, 22, 30, 32 oder 28, 50) für das Erzeugen eines Bildes des Diamanten oder Edelsteines, wenn er mit Diffusionsstrahlung oder Direktstrahlung bestrahlt wird; und
eine Anzeigeeinrichtung (40 oder 156) für das Anzeigen des Bildes;
**dadurch gekennzeichnet, daß** die Betrachtungsvorrichtung für das Betrachten eines Merkmales auf der Oberfläche des Diamanten oder Edelsteines vorgesehen ist, wobei die Betrachtungseinrichtung (28, 22, 30, 32 oder 28, 50) für das Erzeugen eines ersten Bildes von mindestens einem Abschnitt der Oberfläche, wenn mit Diffusionsstrahlung bestrahlt wird, und, durch die gerichtete Reflexion von der Oberfläche, wenn mit der Direktstrahlung bestrahlt wird, eines zweiten Bildes von mindestens dem Abschnitt der Oberfläche, auf dem das Merkmal gebildet wird, vorgesehen ist, und wobei die Anzeigeeinrichtung (40 oder 156) für das Anzeigen des ersten und zweiten Bildes vorgesehen ist

2. Betrachtungsvorrichtung nach Anspruch 1, bei der alle beanspruchten Elemente der Vorrichtung in einem einzelnen Gehäuse (150) eingeschlossen sind.

3. Betrachtungsvorrichtung für das Betrachten eines Diamanten oder Edelsteines (14), die aufweist:
eine Bestrshlungseinrichtung (36, 38 oder 102, 104, 106) für das Bestrahlen des Diamanten oder Edelsteines (14);
eine Betrachtungseinrichtung (28, 22, 30, 32 oder 28, 50) für das Erzeugen eines Bildes des Diamanten oder Edelsteines, wenn er bestrahlt wird;
einen Anzeigebildschirm (156) für das Anzeigen des Bildes; und
ein Gehäuse (150), innerhalb dessen die Bestrahlungseinrichtung (36, 38 oder 102, 104, 106), die Betrachtungseinrichtung (28, 22, 30, 32 oder 28, 50) und der Anzeigebildschirm (156) montiert sind;
**dadurch gekennzeichnet, daß** die Betrachtungsvorrichtung für das Betrachten eines Merkmales auf der Oberfläche des Diamanten oder Edelsteines vorgesehen ist, und daß die Betrachtungseinrichtung (28, 22, 30, 32 oder 28, 50) für das Erzeugen eines vergrößerten Bildes von mindestens einem Abschnitt der Oberfläche durch die gerichtete Reflexion von der Oberfläche vorgesehen ist

4. Betrachtungsvorrichtung nach einem der vorhergehenden Ansprüche, bei der die Betrachtungseinrichtung (28, 22, 30, 32 oder 28, 50) für das Erzeugen des gerichteten Reflexionsbildes durch Rückstrahlung vorgesehen ist.

5. Betrachtungsvorrichtung nach einem der vorhergehenden Ansprüche, die einen Strahlenteiler (16) für das Lenken der Strahlung von der Bestrahlungseinrichtung zur Oberfläche des zu betrachtenden Diamanten oder Edelsteines aufweist.

6. Betrachtungsvorrichtung nach einem der vorhergehenden Ansprüche, bei der die Diffusionsbestrahlungseinrichtung mindestens zwei Strahlungsquellen (102, 106) aufweist, wobei die Quellen (102, 106) unter einem Winkel derart angeordnet sind, daß sich ihre Strahlenwege mindestens teilweise überdecken.

7. Betrachtungsvorrichtung nach Anspruch 1 oder 2 oder einem der Ansprüche 4 bis 6, wenn sie direkt oder indirekt als Anhang zum Anspruch 1 gelesen werden, die so angeordnet ist, daß die Direktbestrahlungseinrichtung abgeschaltet ist, wenn die Diffusionsbestrahlungseinrichtung eingeschaltet ist, und daß die Diffusionsbestrahlungseinrichtung abgeschaltet ist, wenn die Direktbestrahlungseinrichtung eingeschaltet ist

8. Betrachtungsvorrichtung nach einem der vorhergehenden Ansprüche, bei der die Bestrahlungseinrichtung für das Erzeugen des Bildes durch die gerichtete Reflexion eine lichtundurchlässige Scheibe (34) aufweist, die mit einer einzelnen, im allgemeinen mittigen Öffnung (38) gebildet wird, wobei die Scheibe (34) innerhalb des Strahlenweges beim Gebrauch positioniert wird, so daß der Diamant oder Edelstein (14) durch die Öffnung (38), im allgemeinen senkrecht zur Oberfläche, bestrahlt wird.

9. Betrachtungsvorrichtung nach einem der Ansprüche 1 bis 7, bei der die Bestrahlungseinrichtung für das Erzeugen des Bildes durch die gerichtete Reflexion eine lichtundurchlässige Scheibe aufweist, die mit zwei Öffnungen gebildet wird, die in der Scheibe auf beiden Seiten von einer im allgemeinen mittigen Position dieser angeordnet sind, wobei die Oberfläche mit Lichtstrahlen unter im wesentlichen dem gleichen Winkel zur Senkrechten zur Oberfläche beleuchtet werden kann, aber, wenn senkrecht zur Oberfläche betrachtet wird, in im wesentlichen entgegengesetzten Richtungen.

10. Betrachtungsvorrichtung nach einem der Ansprüche 1 bis 7, bei der die Bestrahlungseinrichtung für das Erzeugen des Bildes durch die gerichtete Reflexion eine lichtundurchlässige Scheibe aufweist, die mit einer einzelnen außermittigen Öffnung gebildet wird, wobei die Oberfläche mit einem Strahl unter einem Winkel zur Senkrechten zur Oberfläche beleuchtet werden kann.

11. Betrachtungsvorrichtung nach allen der Ansprüche 8 bis 10, bei der die lichtundurchlässige Scheibe die im allgemeinen mittige Öffnung, die zwei Öffnungen und die einzelne außermittige Öffnung aufweist, und wobei die Vorrichtung so angeordnet ist, daß der Diamant oder Edelstein bei Benutzung der mittigen Öffnung oder der zwei Öffnungen oder der außermittigen Öffnung bestrahlt werden kann.

12. Betrachtungsvorrichtung nach einem der Ansprüche 1 bis 7, bei der die Bestrahlungseinrichtung für das Erzeugen des Bildes durch die gerichtete Reflexion eine lichtundurchlässige Scheibe aufweist, die mit einer Vielzahl von Öffnungen gebildet wird.

13. Betrachtungsvorrichtung nach Anspruch 1 oder 2 oder einem der Ansprüche 4 bis 12, wenn sie direkt oder indirekt als Anhang zum Anspruch 1 gelesen werden, bei der eine einzelne Strahlungsquelle (12) vorhanden ist, die die Diffusionsbestrahlungseinrichtung (36) und die Direktbestrahlungseinrichtung (38) aufweist.

14. Betrachtungsvorrichtung nach einem der vorhergehenden Ansprüche, die eine Einrichtung (22 oder 50) für das Verändern des Niveaus der Vergrößerung aufweist, bei der der Diamant oder Edelstein betrachtet wird.

15. Betrachtungsvorrichtung nach Anspruch 14, bei der die Einrichtung (22) für das Verändern des Niveaus der Vergrößerung ein drehbares Rad (26) aufweist, das eine Vielzahl von peripheren Vergrößerungslinsen (24a, 24b) aufweist.

16. Betrachtungsvorrichtung nach Anspruch 14, bei der die Einrichtung für das Verändern des Niveaus der Vergrößerung ein Vergrößerungssystem mit veränderlicher Brennweite aufweist, das ein unbewegliches Vergrößerungssystem mit einer Kamera mit elektronisch verstellbarer Brennweite aufweist.

17. Betrachtungsvorrichtung nach Anspruch 14, bei der die Einrichtung (50) für das Verändern des Niveaus der Vergrößerung eine Vielzahl von Linsen (52) und eine Einrichtung für das Bewegen der Linsen seitlich in den entsprechenden Lichtweg hinein aufweist.

18. Betrachtungsvorrichtung nach einem der Ansprüche 14 bis 17, wenn sie direkt oder indirekt als Anhang zum Anspruch 1 gelesen werden, bei der die Einrichtung für das Verändern des Niveaus der Vergrößerung mit der Diffusionsbestrahlungseinrichtung und der Direktbestrahlungseinrichtung verbunden sind, wobei die entsprechende Bestrahlungseinrichtung betätigt wird, wenn die Vergrößerung auf ein vorgegebenes Niveau verändert wird.

19. Betrachtungsvorrichtung nach Anspruch 18, bei der das erste Bild mit einem ersten Niveau der Vergrößerung und das zweite Bild mit einem zweiten abweichenden Niveau der Vergrößerung erzeugt wird.

20. Betrachtungsvorrichtung nach Anspruch 19, bei der das erste Niveau der Vergrößerung niedriger ist als das zweite Niveau.

21. Betrachtungsvorrichtung nach einem der vorhergehenden Ansprüche, die einen beweglichen Betrachtungsobjekttisch (10) aufweist, auf dem der Diamant oder Edelstein (14) angeordnet werden soll, wobei die Position des Diamanten oder Edelsteines (14) relativ zum Strahlenweg durch Bewegen des Betrachtungsobjekttisches (10) regulierbar ist

22. Betrachtungsvorrichtung nach einem der vorhergehenden Ansprüche, die einen Betrachtungsobjekttisch (10) aufweist, von dem mindestens ein Abschnitt ein durchlässiges Fenster umfaßt, auf oder über dem der zu betrachtende Diamant oder Edelstein (14) angeordnet werden kann.

23. Betrachtungsvorrichtung nach Anspruch 22, bei der mindestens die Unterseite des durchlässigen Fensters (10) mit einer Antireflexionssubstanz beschichtet ist.

24. Betrachtungsvorrichtung nach einem der Ansprüche 21 bis 23, bei der der Betrachtungsobjekttisch (10) mittels eines Kardanringes montiert ist, so daß der Betrachtungsobjekttisch bei Benutzung gekippt und bewegt werden kann.

25. Betrachtungsvorrichtung nach einem der Ansprüche 21 bis 24, bei der der Betrachtungsobjekttisch (10) eine drehbare Platte umfaßt, so daß die Ausrichtung des Diamanten oder Edelsteines um die Betrachtungsachse verändert werden kann.

26. Betrachtungsvorrichtung nach einem der vorhergehenden Ansprüche, die eine Einrichtung für das Halten des Diamanten oder Edelsteines (14) aufweist.

27. Betrachtungsvorrichtung nach einem der vorhergehenden Ansprüche, bei der die Bestrahlungseinrichtung eine oder mehrere weiße Lichtemitterdioden (12 oder 102, 104, 106) aufweist.

28. Betrachtungsvorrichtung nach einem der vorhergehenden Ansprüche, bei der die Betrachtungseinrichtung eine Kamera (18) aufweist.

29. Betrachtungsvorrichtung nach einem der vorhergehenden Ansprüche, bei der die Anzeigeeinrichtung oder der Anzeigebildschirm einen Videomonitor (40 oder 156) aufweist.

30. Betrachtungsvorrichtung nach Anspruch 29, bei der der Videomonitor (156) ein dünner LCD-Anzeigemonitor ist.

31. Betrachtungsvorrichtung nach Anspruch 2 oder 3 oder einem der Ansprüche 4 bis 30, wenn sie direkt oder indirekt als Anhang zu Anspruch 2 oder 3 gelesen werden, bei der das Gehäuse (150) einen Unterbau (152) und einen Deckel (154) aufweist, der am Unterbau (152) befestigt ist, wobei die Anzeigeeinrichtung oder der Anzeigebildschirm (156) am oder im Deckel (154) montiert ist.

32. Betrachtungsvorrichtung nach einem der Ansprüche 2 bis 31, bei der die Anzeigeeinrichtung oder der Anzeigebildschirm (156) relativ zum Gehäuse (150) drehbar ist.

33. Betrachtungsvorrichtung nach einem der Ansprüche 2 bis 32, die einen Drehtisch auf der unteren Fläche des Gehäuses (150) aufweist, so daß das Gehäuse (150) relativ zu der Fläche drehbar ist, auf der es steht.

34. Betrachtungsvorrichtung nach einem der vorhergehenden Ansprüche, die in der Lage ist, ein Bild von einem Merkmal zu erzeugen, das unsichtbar ist, und das Merkmal auf der Anzeigeeinrichtung oder dem Anzeigebildschirm anzuzeigen.

35. Betrachtungsvorrichtung nach einem der vorhergehenden Ansprüche, die in der Lage ist, ein Bild von einem Merkmal, das auf der Oberfläche des Diamanten oder Edelsteines durch Entfernen von Material des Diamanten oder Edelsteines gebildet wurde, und wobei das Merkmal kein wesentliches Nachdunkeln aufweist, zu erzeugen, und das Merkmal auf der Anzeigeeinrichtung oder dem Anzeigebildschirm anzuzeigen.

36. Verfahren zum Betrachten eines Diamanten oder Edelsteines (14), das die folgenden Schritte aufweist: Bestrahlen des Diamanten oder Edelsteines mit Diffusionsstrahlung oder mit Direktstrahlung; und Erzeugen eines Bildes des Diamanten oder Edelsteines, wenn er mit Diffusionsstrahlung oder mit Direktstrahlung bestrahlt wird, **dadurch gekennzeichnet, daß** das Verfahren für das Betrachten eines Merkmales auf der Oberfläche des Diamanten oder Edelsteines (14) vorgesehen ist und die folgenden Schritte aufweist: Bestrahlen mindestens eines Abschnittes der Oberfläche mit Diffusionsstrahlung; Bestrahlen mindestens eines Abschnittes der Oberfläche mit Direktstrahlung; Erzeugen eines ersten Bildes von mindestens einem Abschnitt der Oberfläche, wenn mit Diffusionsstrahlung bestrahlt wird, und, durch gerichtete Reflexion von der Oberfläche, wenn mit Direktstrahlung bestrahlt wird, eines zweiten Bildes von mindestens dem Abschnitt der Oberfläche, auf der das Merkmal ausgebildet ist; und Anzeigen des ersten und des zweiten Bildes, wobei das zweite Bild das Merkmal umfaßt.

37. Verfahren zum Betrachten eines Diamanten oder Edelsteines (14), **dadurch gekennzeichnet, daß** ein Merkmal auf der Oberfläche des Diamanten oder Edelsteines (14) betrachtet wird, indem die Betrachtungsvorrichtung nach Anspruch 3, um ein Bild des Merkmales zu erzeugen, verwendet und das Merkmal auf dem Anzeigebildschirm (156) angezeigt wird.

38. Verfahren nach Anspruch 36, bei dem das erste Bild mit einem ersten Niveau der Vergrößerung und das zweite Bild mit einem zweiten abweichenden Niveau der Vergrößerung erzeugt wird.

39. Verfahren nach Anspruch 38, bei dem das erste Niveau der Vergrößerung niedriger ist als das zweite Niveau.

40. Verfahren nach Anspruch 36 oder nach Anspruch 38 oder 39, wenn er direkt oder indirekt als Anhang zum Anspruch 36 gelesen wird, bei dem, wenn die Oberfläche des Diamanten oder Edelsteines (14) mit Diffusionsstrahlung bestrahlt wird, im wesentlichen alles von mindestsens einer Kristallfläche des Diamanten oder Edelsteines (14) angezeigt wird.

41. Verfahren nach einem der Ansprüche 36 bis 40, das umfaßt: das Regulieren der Position des Diamanten oder Edelsteines (14) relativ zum Strahlenweg, so daß das Merkmal abgebildet werden kann; und das Anzeigen des Abschnittes der Kristallfläche, der das Merkmal trägt.

42. Verfahren nach Anspruch 41, bei dem die Position des Diamanten oder Edelsteines reguliert wird, um eine Rückstrahlung zu erhalten.

43. Verfahren nach Anspruch 41 oder 42, bei dem der Diamant oder Edelstein (14) auf einem beweglichen Betrachtungsobjekttisch (10) angeordnet wird, wobei die Position des Diamanten oder Edelsteines (14) relativ zum Strahlenweg durch Bewegen des Betrachtungsobjekttisches (10) reguliert wird.

44. Verfahren nach einem der Ansprüche 36 bis 43, bei dem der Edelstein (14) ein Diamantedelstein ist.

45. Verfahren nach einem der Ansprüche 36 bis 44, bei dem das Merkmal für das bloße Auge unsichtbar ist, und, wenn das Bild durch die gerichtete Reflexion gebildet wird, das Merkmal auf der Anzeigeeinrichtung oder dem Anzeigebildschirm angezeigt wird.

46. Verfahren nach einem der Ansprüche 36 bis 45, bei dem das Merkmal auf der Oberfläche des Diamanten oder Edelsteines durch Entfernen von Material des Diamanten oder Edelsteines gebildet wurde und kein wesentliches Nachdunkeln aufweist und, wenn das Bild durch die gerichtete Reflexion gebildet wird, das Merkmal auf der Anzeigeeinrichtung oder dem Anzeigebildschirm angezeigt wird.

47. Verfahren nach einem der Ansprüche 36 bis 46, das bei Verwendung der Vorrichtung nach einem der Ansprüche 2 und 4 bis 35 durchgeführt wird.

## Revendications

1. Dispositif de visualisation pour visualiser un diamant ou une pierre précieuse (14), comprenant:
un moyen à irradiation diffuse (36 ou 102, 106) pour irradier le diamant ou la pierre précieuse (14) avec un rayonnement diffus;
un moyen à irradiation directe (38 ou 104) pour irradier le diamant ou la pierre précieuse (14) par un rayonnement direct;
des moyens de visualisation (28, 22, 30, 32 ou 28, 50) pour produire une image du diamant ou de la pierre précieuse lors de l'irradiation avec le rayonnement diffus ou le rayonnement direct; et
un moyen d'affichage (40 ou 156) pour afficher ladite image;
**caractérisé en ce que** le dispositif de visualisation sert à visualiser une marque sur la surface du diamant ou de la pierre précieuse, les moyens de visualisation (28, 22, 30, 32 ou 28, 50) servant à produire une première image d'au moins une partie de ladite surface lors de l'irradiation avec le rayonnement diffus et, par réflexion directe à partir de ladite surface lors de l'irradiation avec le rayonnement direct, une deuxième image d'au moins une partie de ladite surface sur laquelle la marque est formée, le moyen d'affichage (40 ou 156) servant à afficher lesdites première et deuxième images.

2. Dispositif de visualisation selon la revendication 1, dans lequel tous les éléments revendiqués du dispositif sont inclus dans un seul boîtier (150).

3. Dispositif de visualisation pour visualiser un diamant ou une pierre précieuse (14), comprenant:
des moyens d'irradiation (36, 38 ou 102, 104, 106) pour irradier le diamant ou la pierre précieuse (14);
des moyens de visualisation (28, 22, 30, 32 ou 28, 50) pour produire une image du diamant ou de la pierre précieuse lors de l'irradiation;
un écran d'affichage (156) pour afficher ladite image; et
un boîtier (150) dans lequel sont montés les moyens d'irradiation (36, 38 ou 102, 104, 106), les moyens de visualisation (28, 22, 30, 32 ou 28, 50) et l'écran d'affichage (156);
**caractérisé en ce que** le dispositif de visualisation sert à visualiser une marque sur la surface du diamant ou de la pierre précieuse, les moyens de visualisation (28, 22, 30, 32 ou 28, 50) servant à produire une image agrandie d'au moins une partie de ladite surface par réflexion directe à partir de ladite surface.

4. Dispositif de visualisation selon l'une quelconque des revendications précédentes, dans lequel les moyens de visualisation (28, 22, 30, 32 ou 28, 50) servent à produire l'image à réflexion directe par rétro-réflexion.

5. Dispositif de visualisation selon l'une quelconque des revendications précédentes, comprenant un diviseur de faisceau (16) pour diriger le rayonnement desdits moyens d'irradiation vers la surface dudit diamant ou de ladite pierre précieuse devant être visualisée.

6. Dispositif de visualisation selon l'une quelconque des revendications précédentes, dans lequel les moyens à irradiation diffuse comprennent au moins deux sources d'irradiation (102, 106), les sources (102, 106) étant inclinées de sorte que leurs trajectoires d'irradiation se chevauchent au moins partiellement.

7. Dispositif de visualisation selon les revendications 1 ou 2 ou selon l'une quelconque des revendications 4 à 6 dépendant directement ou indirectement de la revendication 1, agencé de sorte que ledit moyen à irradiation directe est coupé lorsque ledit moyen à irradiation diffuse est branché, ledit moyen à irradiation diffuse étant coupé lorsque ledit moyen à irradiation directe est branché.

8. Dispositif de visualisation selon l'une quelconque des revendications précédentes, dans lequel les moyens d'irradiation destinés à produire l'image par réflexion directe comprennent un écran opaque (34) comportant une seule ouverture généralement centrale (38), ledit écran (34) étant positionné en service dans la trajectoire d'irradiation, de sorte que le diamant ou la pierre précieuse (14) est irradié à travers ladite ouverture (38) généralement perpendiculaire à ladite surface.

9. Dispositif de visualisation selon l'une quelconque des revendications 1 à 7, dans lequel les moyens d'irradiation destinés à produire l'image par réflexion directe comprennent un écran opaque comportant deux ouvertures agencées dans l'écran de chaque côté d'une position généralement centrale correspondante, ladite surface pouvant ainsi être éclairée par des rayons de lumière à un angle pratiquement égal à la perpendiculaire par rapport à ladite surface, mais dans des directions pratiquement opposées dans une orientation perpendiculaire à ladite surface.

10. Dispositif de visualisation selon l'une quelconque des revendications 1 à 7, dans lequel les moyens d'irradiation destinés à produire l'image par réflexion directe comprennent un écran opaque comportant une seule ouverture décentrée, ladite surface pouvant ainsi être éclairée par un rayon à un angle par rapport à la perpendiculaire par rapport à ladite surface.

11. Dispositif de visualisation selon les revendications 8 à 10, dans lequel l'écran opaque comporte ladite ouverture généralement centrale, lesdites deux ouvertures et ladite ouverture décentrée individuelle, le dispositif étant agencé de sorte que le diamant ou la pierre précieuse peut être irradié à travers l'ouverture centrale, lesdites deux ouvertures ou l'ouverture décentrée.

12. Dispositif de visualisation selon l'une quelconque des revendications 1 à 7, dans lequel les moyens d'irradiation destinés à produire l'image par réflexion directe comprennent un écran opaque comportant plusieurs ouvertures.

13. Dispositif de visualisation selon les revendications 1 ou 2 ou selon l'une quelconque des revendications 4 à 12 dépendant directement ou indirectement de la revendication 1, comportant une seule source d'irradiation (12) comprise dans ledit moyen à irradiation par diffusion (36) et dans ledit moyen à irradiation directe (38).

14. Dispositif de visualisation selon l'une quelconque des revendications précédentes, comprenant des moyens (22 ou 50) pour changer le niveau de grossissement de visualisation dudit diamant ou de ladite pierre précieuse.

15. Dispositif de visualisation selon la revendication 14, dans lequel lesdits moyens de changement du niveau de grossissement (22) comprennent une roue rotative (26) comportant plusieurs lentilles de grossissement périphériques (24a, 24b).

16. Dispositif de visualisation selon la revendication 14, dans lequel lesdits moyens de changement du niveau de grossissement comprennent un système de grossissement à focale variable comprenant un système de grossissement fixe avec une caméra électronique à focale variable.

17. Dispositif de visualisation selon la revendication 14, dans lequel lesdits moyens de changement du niveau de grossissement (50) comprennent plusieurs lentilles (52) et un moyen pour déplacer les lentilles latéralement dans la trajectoire de lumière respective.

18. Dispositif de visualisation selon l'une quelconque des revendications 14 à 17, dépendant directement ou indirectement de la revendication 1, dans lequel lesdits moyens de changement du niveau de grossissement sont associés au moyen à irradiation diffuse et au moyen à irradiation directe, le moyen d'irradiation respectif étant ainsi actionné lorsque le grossissement est changé à un niveau prédéterminé.

19. Dispositif de visualisation selon la revendication 18, dans lequel ladite première image est produite à un premier niveau de grossissement, ladite deuxième image étant produite à un deuxième niveau de grossissement différent.

20. Dispositif de visualisation selon la revendication 19, dans lequel le premier niveau de grossissement est inférieur au deuxième niveau.

21. Dispositif de visualisation selon l'une quelconque des revendications précédentes, comprenant un plateau de visualisation mobile (10) sur lequel le diamant ou la pierre précieuse (14) doit être positionné, la position du diamant ou de la pierre précieuse (14) par rapport à la trajectoire d'irradiation pouvant être ajustée en déplaçant le plateau de visualisation (10).

22. Dispositif de visualisation selon l'une quelconque des revendications précédentes, comprenant un plateau de visualisation (10) dont au moins une partie englobe une fenêtre transparente sur laquelle ou au-dessus de laquelle le diamant ou la pierre précieuse (14) devant être visualisé peut être positionné.

23. Dispositif de visualisation selon la revendication 22, dans lequel au moins le côté inférieur de ladite fenêtre transparente (10) est revêtue d'une substance antireflet.

24. Dispositif de visualisation selon l'une quelconque des revendications 21 à 23, dans lequel ledit plateau de visualisation (10) est monté par l'intermédiaire d'un étrier, de sorte que le plateau de visualisation peut être incliné et déplacé en service.

25. Dispositif de visualisation selon l'une quelconque des revendications 21 à 24, dans lequel ledit plateau de visualisation (10) englobe une plaque rotative, permettant le changement de l'orientation du diamant ou de la pierre précieuse autour de l'axe de visualisation.

26. Dispositif de visualisation selon l'une quelconque des revendications précédentes, comprenant un moyen pour retenir ledit diamant ou ladite pierre précieuse (14).

27. Dispositif de visualisation selon l'une quelconque des revendications précédentes, dans lequel ledit moyen d'irradiation comprend une ou plusieurs diodes électroluminescentes blanches (12 ou 102, 104, 106).

28. Dispositif de visualisation selon l'une quelconque des revendications précédentes, dans lequel ledit moyen de visualisation comprend une caméra (18).

29. Dispositif de visualisation selon l'une quelconque des revendications précédentes, dans lequel ledit moyen d'affichage ou ledit écran d'affichage comprend un moniteur vidéo (40 ou 156).

30. Dispositif de visualisation selon la revendication 29, dans lequel ledit moniteur vidéo (156) est un moniteur à écran à cristaux liquides mince.

31. Dispositif de visualisation selon les revendications 2 ou 3 ou selon l'une quelconque des revendications 4 à 30, dépendant directement ou indirectement des revendications 2 ou 3, dans lequel le boîtier (150) comprend une base (152) et un couvercle (154) fixé à la base (152), le moyen d'affichage ou l'écran d'affichage (156) étant monté sur ou dans ledit couvercle (154).

32. Dispositif de visualisation selon l'une quelconque des revendications 2 à 31, dans lequel le moyen d'affichage ou l'écran d'affichage (154) peut pivoter par rapport au boîtier (150).

33. Dispositif de visualisation selon l'une quelconque des revendications 2 à 32, comprenant un tourniquet sur la surface inférieure du boîtier (150), de sorte que le boîtier (150) peut tourner par rapport à la surface sur laquelle il est agencé.

34. Dispositif de visualisation selon l'une quelconque des revendications précédentes, capable de produire une image d'une marque invisible et d'afficher la marque sur le moyen d'affichage ou l'écran d'affichage.

35. Dispositif de visualisation selon l'une quelconque des revendications précédentes, capable de produire une image d'une marque formée sur la surface du diamant ou de la pierre précieuse par élimination du matériau du diamant ou de la pierre précieuse, la marque ne comprenant pas d'obscurcissement notable, et d'afficher la marque sur le moyen d'affichage ou l'écran d'affichage.

36. Procédé de visualisation d'un diamant ou d'une pierre précieuse (14), comprenant les étapes d'irradiation du diamant ou de la pierre précieuse avec un rayonnement diffus ou avec un rayonnement direct et de production d'une image du diamant ou de la pierre précieuse irradié avec le rayonnement diffus ou le rayonnement direct, **caractérisé en ce que** le procédé sert à visualiser une marque sur la surface du diamant ou de la pierre précieuse (14) et comprend les étapes d'irradiation d'au moins une partie de ladite surface avec un rayonnement diffus, d'irradiation d'au moins une partie de ladite surface avec un rayonnement direct, de production d'une première image d'au moins une partie de ladite surface lors de l'irradiation avec le rayonnement diffus, et, par réflexion directe à partir de ladite surface, lors d'une irradiation avec un rayonnement directe, d'une deuxième image d'au moins la partie de ladite surface sur laquelle est formée la marque, et d'affichage des première et deuxième images, la deuxième image englobant la marque.

37. Procédé de visualisation d'un diamant ou d'une pierre précieuse (14), **caractérisé en ce qu'**une marque sur la surface du diamant ou de la pierre précieuse (14) est visualisée par l'intermédiaire du dispositif de visualisation selon la revendication 3 pour produire une image de la marque et afficher la marque sur l'écran d'affichage (156).

38. Procédé selon la revendication 36, dans lequel ladite première image est produite à un premier niveau de grossissement, ladite deuxième image étant produite à un deuxième niveau de grossissement différent.

39. Procédé selon la revendication 38, dans lequel le premier niveau de grossissement est inférieur au deuxième niveau.

40. Procédé selon la revendication 36 ou selon les revendications 38 ou 39 dépendant directement ou indirectement de la revendication 36, dans lequel, lors de l'irradiation de la surface du diamant ou de la pierre précieuse (14) avec un rayonnement diffus, pratiquement l'ensemble d'au moins une facette du diamant ou de la pierre précieuse (14) est affiché.

41. Procédé selon l'une quelconque des revendications 36 à 40, englobant l'ajustement de la position du diamant ou de la pierre précieuse (14) par rapport à la trajectoire d'irradiation, de sorte que la marque peut être visualisée et l'affichage de la partie de la facette supportant la marque.

42. Procédé selon la revendication 41, dans lequel la position du diamant ou de la pierre précieuse est ajustée pour assurer une rétro-réflexion.

43. Procédé selon les revendications 41 ou 42, dans lequel le diamant ou la pierre précieuse (14) est agencé sur un plateau de visualisation mobile (10), la position du diamant ou de la pierre précieuse (14) par rapport à la trajectoire d'irradiation étant ajustée en déplaçant le plateau de visualisation (10).

44. Procédé selon l'une quelconque des revendications 36 à 43, dans lequel ladite pierre précieuse (14) est une pierre précieuse constituée d'un diamant.

45. Procédé selon l'une quelconque des revendications 36 à 43, dans lequel la marque est invisible à l'oeil nu, la marque étant affichée sur le moyen d'affichage ou l'écran d'affichage lorsque l'image est formée par réflexion directe.

46. Procédé selon l'une quelconque des revendications 36 à 45, dans lequel la marque a été formée sur la surface du diamant ou de la pierre précieuse par élimination de matériau du diamant ou de la pierre précieuse et ne comprend pas d'obscurcissement notable, la marque étant affichée sur le moyen d'affichage ou l'écran d'affichage lorsque l'image est formée par réflexion directe.

47. Procédé selon l'une quelconque des revendications 36 à 46, exécuté par l'intermédiaire du dispositif selon l'une quelconque des revendications 2 et 4 à 35.
